# EUROPÄISCHE PATENTSCHRIFT

(11) **EP 1 609 927 B1**
(45) Veröffentlichungstag und Bekanntmachung des Hinweises auf die Patenterteilung: **15.06.2011**
(21) Anmeldenummer: 05005014.5
(22) Anmeldetag: 08.03.2005
(51) Int. Cl.: E04F 15/02

(54) **Bodenbelag mit Fliesen**
Floor covering comprising tiles
Revêtement de sol comprenant des carreaux

(30) Priorität: 03.06.2004 DE 202004008857 U
(43) Veröffentlichungstag der Anmeldung: 28.12.2005
(73) Patentinhaber: Meiwes, Heiko, 59590 Geseke (DE); Schäfers, Helmut, 33129 Delbrück (DE)
(72) Erfinder: Meiwes, Heiko, 59590 Geseke (DE); Schäfers, Helmut, 33129 Delbrück (DE)
(74) Vertreter: Ostermann, Thomas

(56) Entgegenhaltungen:
- EP-A- 0 239 041
- DE-A1- 19 637 635
- DE-A1- 19 857 120
- DE-U1- 29 805 940

## Beschreibung

Die Erfindung betrifft eine Bodenbelag für den Außenbereich nach dem Oberbegriff des Patentanspruchs 1.

Aus der DE 197 42 571 C1 ist eine Bodenbelagsfliese für den Außenbereich bekannt, die als Bodenbekleidung für einen Balkon eingesetzt wird. Hierzu werden die einzelnen Bodenbelagsfliesen auf ein Mörtelbett oder auf eine Estrichschicht aufgesetzt. Zur Abführung der sich im Innern vom Estrich bzw. Mörtel bildenden Feuchtigkeit weist der Mörtel bzw. der Estrich nach oben offene Kanäle auf, die sich verteilt jeweils über die gesamte Länge oder Breite der durch die Fliesen abgedeckten Fläche erstrecken. Dadurch, dass die Kanäle am stirnseitigen Rand offen ausgebildet sind, kann das Wasser randseitig der Fläche durch gegebenenfalls weitere Maßnahmen abgeführt werden. Nachteilig an der bekannten Anordnung ist jedoch, dass zur Bildung der Kanäle zwischen den Fliesen ein vorgegebener Zwischenraum vorgesehen sein muss, der zum einen den Aufwand beim Verlegen der Bodenbelagsfliesen erhöht und zum anderen keinen optisch ansprechenden Eindruck bietet.

Aus der EP 0 239 041 A2 ist eine Bodenbelagsfliese für den Außenbereich bekannt, die sich aus einem mit einer Dekorationsfläche versehenen plattenförmigen Fliesenteil und einem Trägerteil zusammensetzt. Das Trägerteil ist als eine fest mit dem Fliesenteil verbundene elastische Unterlage ausgebildet, die aus einem Gummimaterial besteht. Das Gummimaterial kann als Granulat-Gummi offenporig ausgebildet sein, so dass sich die Elastizität des Trägerteils einstellen lässt. Darüber hinaus ermöglicht die Porosität ein Abführen von Wasser (Drainage). Zur Drainage ist das Trägerteil an einer Unterseite mit kegel- oder pyramidenförmigen Noppen versehen, so dass sich Zwischenräume bilden, so dass das durch die Fugen eingebrachte Wasser unter den Trägerteilen abfließen kann.

Aufgabe der vorliegenden Erfindung ist es daher, eine Bodenbelagsfliese derart weiterzubilden, dass zum einen das Verlegen der Bodenbelagsfliesen vereinfacht wird und zum anderen eine langzeitstabile Positionierung der Bodenbelagsfliesen in der vorgesehenen Lage gewährleistet ist.

Zur Lösung dieser Aufgabe weist die Erfindung die Merkmale des Patentanspruchs 1 auf.

Der besondere Vorteil der Erfindung besteht darin, dass die Bodenbelagsfliese selbst ein Trägerteil aufweist, das zum einen eine stabilisierende Wirkung und zum anderen eine feuchtigkeitsaufnehmende Wirkung aufweist. Hierdurch können zum einen auch relativ dünne Fliesenteile (eigentliche Fliese) bruchsicher verlegt werden. Darüber hinaus weist das Trägerteil offene Poren auf, so dass Feuchtigkeit aus dem unterhalb der Bodenbelagsfliesen befindlichen Untergrund aufgenommen werden kann. Beispielsweise sind die Hohlräume derart groß gewählt, dass nach Umwandlung des eingedrungenen Wassers in einen festen Aggregatszustand in Folge von Temperaturverminderung dasselbe aufgenommen wird, ohne dass einzelne Fliesen dadurch in unerwünschter Weise angehoben werden. Grundgedanke der Erfindung ist es, dass das Trägerteil offene Poren derart aufweist, dass insbesondere Wasser von einer Unterseite der Bodenbelagsfliese her aufgenommen werden kann, so dass ein unerwünschtes selbsttätiges Anheben der Belagsfliese nicht eintritt. Die Granulatteilchen können innerhalb des Trägerteils derart flexibel in dem aushärtbaren Kleber gehalten sein, dass Druckkräfte des in den Poren frierenden Wassers aufgenommen werden können. Nach der Erfindung weisen die beliebig geformten Granulatteilchen eine Korngröße in einem Durchmesserbereich von zwischen 2 mm und 8 mm auf. Die Verklebung der Granulatteilchen erfolgt mittels eines Kunstharzklebers. Die Bodenbelagsfliesen können zum einen auf einem Estrich-Unterbau aufgeklebt sein, wobei in dem Fugenspalt ein wasserdurchlässiger Fugenmörtel auf einer Splittschicht in Höhe von etwa 1 cm angeordnet ist. Zum anderen können die Bodenbelagsfliesen lediglich auf einer Splittschicht lose aufgebracht und dann abgerüttelt werden, wobei in dem Fugenspalt der wasserdurchlässige Fugenmörtel eingebracht ist.

Ein Ausführungsbeispiel der Erfindung wird anhand der Zeichnungen näher erläutert.

Es zeigen:
- Figur 1: einen Vertikalschnitt durch eine Bodenbelagsflie- sen und
- Figur 2: eine vergrößerte Darstellung X in Figur 1 einer Einzelheit der Bodenbelagsfliese.

Eine Bodenbelagsfliese 1 wird im Wesentlichen im Außenbereich, beispielsweise auf Terrassen oder dergleichen, eingesetzt. Hierzu werden eine Mehrzahl von Bodenbelagsfliesen auf einem ebenen Untergrund 2, der beispielsweise aus einem Betonmaterial oder Estrich bestehen kann, unter Fugenbildung verlegt. Die Bodenbelagsfliesen 1 werden dann mit einem üblichen Fugenmaterial verfugt.

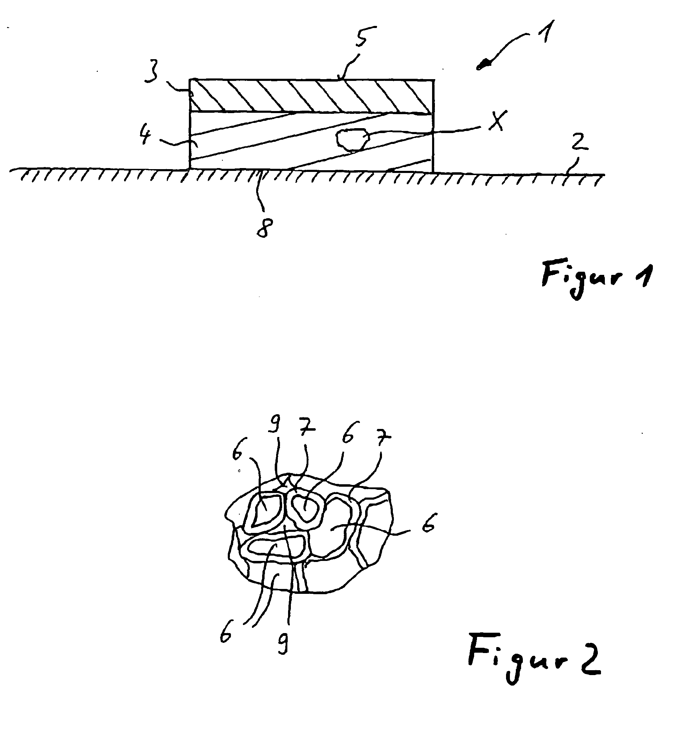

Wie sich aus Figur 1 ergibt, besteht die Bodenbelagsfliese 1 zum einen aus einem oberen plattenförmigen Fliesenteil 3 und einem unteren Trägerteil 4. Das Fliesenteil 3 kann aus einer herkömmlichen Feinsteinzeugfliese gebildet sein, deren Wasseraufnahme bei 0,1 % des Gewichtes derselben liegen kann. Das Fliesenteil 3 bildet somit eine vollkommen dichtgesinterte, unlasierte Platte. An einer oberen, äußeren Oberfläche bildet das Fliesenteil 3 eine Dekorationsfläche 5, die dem Fliesenteil 3 das optisch ansprechende Gepräge verleiht. In einer nicht dargestellten Ausführungsform kann die Dekorationsfläche 5 auch als zusätzliche Schicht auf dem Fliesenteil 3 aufgebracht sein.

Das Trägerteil 4 besteht aus einer Mehrzahl von unregelmäßig angeordneten und asymmetrisch geformten Granulatteilchen 6, die von einem aushärtbaren Kleber 7 umgeben sind. Der aushärtbare Kleber kann als ein Polyester-Harz-Kleber ausgebildet sein. Durch die asymmetrische Formbildung der Granulatteilchen bilden sich innerhalb des Trägerteils 4 offene Poren 9, durch die von einer Unterseite 8 des Trägerteils 4 her Feuchtigkeit, insbesondere Wasser, aufgenommen werden kann. Die Granulatteilchen können eine beliebige Form aufweisen, wobei die Korngröße in einem Durchmesserbereich von 2 mm bis 8 mm liegt. Der aushärtbare Kleber ist als Kunstharzkleber ausgebildet und umgibt die Granulatteilchen 6 im flüssigen Zustand.

Zur Herstellung der Bodenbelagsfliese wird der aushärtbare Kleber im flüssigen Zustand auf die Rückseite des Fliesenteils 3 aufgetragen. Gleichzeitig oder unmittelbar danach wird der aus dem Kunstharzkleber und dem Granulatteilchen/Granulatzuschlag bestehende Mörtel auf die mit dem Kunstharzkleber versehene Rückseite des Fliesenteils 3 frisch in frisch aufgebracht. Das Mischungsverhältnis des Mörtels ist so gewählt, dass sich die gewünschte Porenbildung einstellt. Nach Aushärtung des Kunstharzklebers ist die Bodenbelagsfliese 1 hergestellt.

Nach einer nicht dargestellten alternativen Ausführungsform können die Granulatteilchen 6 auch aus einem Recyclingmaterial, beispielsweise einem Kunststoffmaterial, hergestellt sein. Hierzu könnte sich beispielsweise Polyvenylchlorid (PVC) aus dem Bereich der Fensterherstellung eignen.

Die den Füllstoff des Trägerteils 4 bildenden Granulatteilchen sind von dem wasserabweisenden Kunstharzkleber getränkt und ummantelt und können daher keine Feuchtigkeit aufnehmen. Hierdurch wird eine Ausdehnung bzw. die Beschädigung der Granulatteilchen bei Vorliegen von Frost verhindert.

Da der Kunstharzkleber ein größeres Dehnungs- /Schrumpfungsvermögen bei Temperaturänderung aufweist als der Zementestrich bzw. die Fliesenteile 3 einerseits und das Trägerteil 4 keinen geschlossenen Körper bildet, sondern etwa 20 Vol % Freiräume aufweist, andererseits, kann der Dehnungsfaktor des Trägerteils auf das Niveau des Fliesenteils 3 verringert werden. Das Dehnungsverhalten des Trägerteils 4 ist somit weitgehend angepasst an das Dehnungsverhalten des Fliesenteils 3. Es entstehen keine unerwünschten Spannungen zwischen dem Fliesenteil 3 und dem Trägerteil 4.

Da die mit Kunstharz ummantelten Granulatteilchen des Trägerteils 4 keine Feuchtigkeit aufnehmen, ist das Ausdehnen des Trägerteils 4 bei Frost und somit das so genannte Hochfrieren des Trägerteils 4 ausgeschlossen.

Das Trägerteil 4 kann eine Dicke von 20 mm bis 50 mm, vorzugsweise 35 mm aufweisen. Nach Verbindung des Fliesenteils 3 und des Trägerteils 4 wird eine starre Bodenbelagsfliesen 1 geschaffen, die im Bereich des Trägerteils 4 wasserdurchlässig bzw. wasseraufnahmefähig und im Bereich des Fliesenteils quasi wasserundurchlässig ist.

Vorzugsweise weisen das Fliesenteil 3 und das Trägerteil 4 eine gleiche Grundrissdimensionierung auf, so dass die Schmalseiten derselben zueinander fluchten. Die Bodenbelagsfliesen 1 bildet somit einen geraden Körper, der über acht Seitenkanten verfügt.

Der Volumenanteil des aushärtbaren Klebers 7 liegt unterhalb von 10 % des Volumenanteils der Granulatteilchen 6 am Trägerteil 4.

Die Bodenbelagsfliesen 1 können auch auf einem horizontalen oder geneigten ebenen Unterbau aufgeklebt werden. Das Trägerteil 4 dient dann als Pufferteil. Der flexible Kleber dringt in die vorhandenen Öffnungen ein und erhöht somit seine Klebewirkung.

Zum Verkleben wird der Kleber flächendeckend auf den Unterbau (Estrich) aufgetragen, wobei die Fugen zwischen den Belagsfliesen 1 von dem Kleber freigehalten werden. Vor dem Einbringen des wasserdurchlässigen Fugenmörtels ist Splitt in den Fugenspalt der Höhe von ca. 1 cm einzubringen. Die Drainagewirkung bleibt somit erhalten.

Nach einer alternativen variante kann der Untergrund zum einen durch eine Schotterschicht (Frostschutzschicht) mit einer Körnung von 0 bis 45, vorzugsweise 22, und einer Dicke von mindestens 35 cm aufweisen, die mittels eines geeigneten Verdichtungsgerätes verdichtet wird. Darauf schließt sich eine Splittschicht mit einer Höhe von ca. 3 bis 4 cm an. Die Fliesen 1 werden dann auf den Splitt lose mit Hilfe von Abstandhaltern verlegt und dann abgerüttelt. Die Fliesen können dann mit einem wasserdurchlässigen Fugenmörtel verfugt werden, so dass das Wasser jederzeit über die Fugen nach unten abziehen kann. Das Vorsehen einer Betondecke, ein aufwendiges Abkleben und ein aufwendiger Estrich können somit entfallen.

Das Trägerteil 4 hat eine Drainagefunktion und ermöglicht insbesondere den seitlichen Abfluss des Wassers, das heißt im Wesentlichen in Richtung der Erstreckungsebene der Bodenbelagsfliese 1 bzw. des Trägerteils 4.

## Patentansprüche

1. Bodenbelag mit einer Anzahl von Bodenbelagsfliesen (1) für den Außenbereich, insbesondere Feinsteinzeugfliesen, mit einem plattenförmigen Fliesenteil (3), wobei zumindest eine äußere Oberfläche derselben eine Dekorationsfläche (5) bildet, wobei auf einer der Dekorationsfläche (5) abgewandten Seite des Fliesenteils (3) ein Trägerteil (4) mit demselben fest verbunden ist, wobei das Trägerteil (4) eine Mehrzahl von Granulatteilchen vorgegebener Korngröße aufweist, die derart mittels eines aushärtbaren Klebers (7) miteinander verbunden sind, dass zwischen den Granulatteilchen (6) offene Poren (9) gebildet sind zur wasseraufnahme, wobei die Granulatteilchen (6) von dem Kleber (7) getränkt und ummantelt sind, **dadurch gekennzeichnet, dass** die beliebig geformten Granulatteilchen (6) eine Korngröße in einem Durchmesserbereich von 2 mm bis 8 mm aufweisen, der Kleber ein Wasser abweisender Kunstharzkleber ist und (7) einen Volumenanteil von bis zu 10 % an dem Trägerteil (4) hat und dass in den Fugen zwischen den Bodenbelagsfliesen ein wasserdurchlässiger Fugenmörtel eingebracht ist, wobei der Trägerteil (4) entweder auf einem Estrich-Unterbau aufgeklebt und der wasserdurchlässige Fugenmörtel auf einem in dem Fugenspalt eingebrachten Splitt der Höhe im Bereich von 1 cm angeordnet ist oder wobei der Trägerteil (4) lose auf einer Splittschicht aufgebracht und dann abgerüttelt und der wasserdurchlässige Fugenmörtel in dem Fugenspalt angeordnet ist.

2. Bodenbelag nach Anspruch 1, **dadurch gekennzeichnet, dass** der Kunstharzkleber (7) die Granulatteilchen (6) vollständig umgibt.

3. Bodenbelag nach Anspruch 1 oder 2, **dadurch gekennzeichnet, dass** das Trägerteil (4) eine Dicke von 20 mm bis 50 mm, vorzugsweise 35 mm, hat.

4. Bodenbelag nach einem der Ansprüche 1 bis 3, **dadurch gekennzeichnet, dass** das Trägerteil (4) als eine Trägerplatte ausgebildet ist, die mit dem als eine fluchtende Fliesenplatte ausgebildeten Fliesenteil (3) durch Verklebung verbunden ist.

## Claims

1. Floor covering with a number of floor tiles suitable for outdoor use, in particular fine-grained stoneware tiles, having a plate-shaped tile portion (3) of which one outer face at least is a decorative surface (5) wherein on a side of said tile portion (3) that is facing away from said decorative surface (5) the substrate (4) is inherently joined therewith, wherein the substrate (4) comprises a plurality of granulated particles having a predetermined grain size which are bonded together by means of a curing type adhesive (7) in such a way that open pores (9) are formed between said granulated particles (6) for water absorption and said particles (6) are saturated and coated with said adhesive (7), **characterized in that** the granulated particles (6) of random shape have a grain size from 2 mm to 8 mm, that the adhesive (7) is a water-repellent synthetic resin adhesive and contained in said substrate (4) in a proportionate amount of up 10 %, and that a joint mortar permeable to water is filled into the joints between the floor tiles with either the substrate (4) being bonded to a flooring plaster base and the water-permeable joint mortar placed on top of a stone chip course provided inside the joint gap to a height of about 1 cm or the substrate (4) being loosely placed on a stone chip course and vibration compacted and the water permeable mortar subsequently filled into the gap.

2. Floor covering according to Claim 1, **characterized in that** the synthetic resin adhesive (7) completely surrounds the granulated particles.

3. Floor covering according to Claim 1 or 2, **characterized in that** the substrate (4) has a thickness ranging from 20 mm to 50 mm and preferably of 35 mm.

4. Floor covering according to any of the preceding Claims 1 to 3, **characterized in that** the substrate (4) is in the form of a base plate which is joined to the tile portion (3) provided in the form of a flush type tile plate by bonding.

## Revendications

1. Revêtement de sol modulaire comprenant une pluralité de carreaux de revêtement de sol (1) pour le domaine extérieur, en particulier des carreaux en grès cérames fins, avec un élément de carreau (3) en forme de plaque, dont au moins une surface extérieure forme une surface décorative (5), sachant qu'un élément de support (4) est relié à l'élément de carreau (3), sur une face de celui-ci, qui est opposée à la surface décorative (5), l'élément de support (4) présentant une pluralité de particules de granulat (6) d'une granulométrie prédéterminée, qui sont reliées entre elles au moyen d'une colle (7) durcissable, de sorte que des pores ouverts (9) soient formés entre elles pour l'absorption d'eau, sachant que les particules de granulat (6) sont imbibées et enrobées de colle (7), **caractérisé en ce que** les particules de granulat (6), de forme quelconque, prédéterminée, présentent une granulométrie de l'ordre de 2 à 8 mm de diamètre, que la colle est une colle à la résine synthétique (7) réfractaire à l'eau, et représente un pourcentage volumique allant jusqu'à 10 % du volume de l'élément de support (4), et que du mortier de jointoiement perméable à l'eau est appliqué dans les fentes de jointoiement, formées entre les carreaux de revêtement de sol, que l'élément de support (4) est collé sur une chape et que le mortier de jointoiement perméable à l'eau est disposé sur une couche de gravillons d'une hauteur d'environ 1 cm, appliquée dans la fente de jointoiement, ou que ledit élément de support (4) est posé librement sur une couche de gravillons et ensuite secoué, et que le mortier de jointoiement perméable à l'eau est appliqué dans la fente de jointoiement.

2. Revêtement de sol modulaire selon la revendication 1, **caractérisé en ce que** la colle à la résine synthétique (7) enrobe entièrement les particules de granulat (6).

3. Revêtement de sol modulaire selon revendication 1 ou 2, **caractérisé en ce que** l'élément de support (4) présente une épaisseur de 20 à 50 mm, de préférence de 35 mm.

4. Revêtement de sol modulaire selon l'une des revendications 1 à 3, **caractérisé en ce que** l'élément de support (4) est réalisé sous la forme d'une plaque de support, qui est reliée par collage à l'élément de carreau (3) en forme de plaque en coïncidence.
